(19) Europäisches Patentamt

European Patent Office

Office européen des brevets

(11) **EP 1 574 068 B1**

(12) **FASCICULE DE BREVET EUROPEEN**

(45) Date de publication et mention
de la délivrance du brevet:
**29.11.2006 Bulletin 2006/48**

(21) Numéro de dépôt: **03799671.7**

(22) Date de dépôt: **19.12.2003**

(51) Int Cl.:
*H04N 7/26* (2006.01)

(86) Numéro de dépôt international:
**PCT/FR2003/003846**

(87) Numéro de publication internationale:
**WO 2004/059982 (15.07.2004 Gazette 2004/29)**

(54) **PROCEDE DE CODAGE D'UNE IMAGE PAR ONDELETTES ET PROCEDE DE DECODAGE CORRESPONDANT**

VERFAHREN ZUR WAVELET-BILDCODIERUNG UND ENTSPRECHENDES DECODIERUNGSVERFAHREN

WAVELET IMAGE-ENCODING METHOD AND CORRESPONDING DECODING METHOD

(84) Etats contractants désignés:
**AT BE BG CH CY CZ DE DK EE ES FI FR GB GR HU IE IT LI LU MC NL PT RO SE SI SK TR**

(30) Priorité: **20.12.2002 FR 0216602**

(43) Date de publication de la demande:
**14.09.2005 Bulletin 2005/37**

(73) Titulaire: **FRANCE TELECOM**
**75015 Paris (FR)**

(72) Inventeurs:
  • **BRANGOULO, Sébastien**
    **F-35000 Rennes (FR)**
  • **GIOIA, Patrick**
    **F-35510 CESSON-SEVIGNE (FR)**
  • **LAURENT, Nathalie**
    **F-35630 VIGNOC (FR)**

(74) Mandataire: **Bioret, Ludovic et al**
**Cabinet Vidon**
**16 B, rue Jouanet - B.P. 90333,**
**Technopole Atalante,**
**35703 Rennes Cedex 07 (FR)**

(56) Documents cités:
**WO-A-00/49571          US-B1- 6 236 757**

• **EGGER O ET AL: "HIGH COMPRESSION IMAGE CODING USING AN ADAPTIVE MORPHOLOGICAL SUBBAND DECOMPOSITION" PROCEEDINGS OF THE IEEE, IEEE. NEW YORK, US, vol. 83, no. 2, 1 février 1995 (1995-02-01), pages 272-287, XP000501244 ISSN: 0018-9219**
• **HARIDASAN R ET AL: "Scalable coding of video objects" CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, 31 mai 1998 (1998-05-31), pages 289-292, XP010289442 ISBN: 0-7803-4455-3**
• **DAVOINE F ET AL: "Adaptive Delaunay triangulation for attractor image coding" PATTERN RECOGNITION, 1994. VOL. 1 - CONFERENCE A: COMPUTER VISION & IMAGE PROCESSING., PROCEEDINGS OF THE 12TH IAPR INTERNATIONAL CONFERENCE ON JERUSALEM, ISRAEL 9-13 OCT. 1994, LOS ALAMITOS, CA, USA,IEEE COMPUT. SOC, 9 octobre 1994 (1994-10-09), pages 801-803, XP010216138 ISBN: 0-8186-6265-4**

**Description**

Le domaine de l'invention est celui du codage d'images fixes ou animées, et notamment, mais non exclusivement, du codage d'images successives d'une séquence vidéo. Plus précisément, l'invention concerne une technique de codage/décodage d'images auxquelles sont associées un maillage, et mettant en oeuvre une méthode dite "à ondelettes". L'invention s'applique plus particulièrement, mais non exclusivement aux ondelettes de $2^{ème}$ génération, présentées notamment dans le document de Wim Sweldens, intitulé "The Lifting Scheme : A Construction of Second Generation Wavelets" (en français, "Le procédé d'élévation : une construction des ondelettes de deuxième génération"), SIAM Journal on Mathematical Analysis, Volume 29, number 2, pp 511-546, 1998.

Avec le développement de nouveaux réseaux de transmission (xDSL, mobiles avec le GPRS et l'UMTS, etc.), les techniques de codage d'images et de compression de vidéos numériques doivent s'adapter à l'hétérogénéité des réseaux ainsi qu'aux fluctuations possibles de la qualité de service (QoS) au cours du temps. La prise en considération de tous ces facteurs au niveau du codage d'images fixes ou animées doit permettre de fournir à l'utilisateur final une qualité visuelle optimale.

On connaît à ce jour plusieurs techniques de codage d'images, comme les techniques de codage par prédiction temporelle et transformation en cosinus discrets basés sur une structure de blocs, telles que proposées par les organismes de normalisation ISO/MPEG (en anglais "International Organization for Standardization/Moving Picture Coding Expert Group", en français "Organisation Internationale de Standardisation/Groupe d'Experts pour le Codage d'Images Animées") et/ou ITU-T (en anglais "International Telecommunication Union-Telecommunication Standardization Sector", en français "Union Internationale de Télécommunications-Secteur de standardisation des télécommunications").

On connaît également des techniques de codage propriétaires basées sur un codage par transformée DCT sur des blocs (Microsoft avec Windows Media, RealMedia avec Real One, Divx (marques déposées), etc.), ou encore certaines techniques de codage par ondelettes ou maillages, telles que présentées notamment dans les demandes de brevets français n°2 781 907 intitulée "Procédé de codage d'un maillage source tenant compte des discontinuités, et applications correspondantes" et n° 2 825 855, intitulée "Procédés et dispositifs de codage et de décodage d'images mettant en oeuvre des maillages emboîtés, programme, signal et application correspondantes" au nom du même titulaire que la présente demande de brevet mettant en oeuvre un maillage hiérarchique, définissant un ensemble de sommets et de faces orientées, codé à l'aide d'ondelettes, ou encore dans le document de brevet US 6,236,757 présentant une méthode de codage d'image adaptative, qui consiste à diviser une image en segments (pouvant être rectangulaires ou correspondre à une sous-région de l'image de forme quelconque), et à associer chaque segment d'image à un filtre de transformée en ondelettes de première génération choisi parmi un banc de filtres adaptés à différents types de contenus d'image (bords saillants, contours variant lentement,...) sur la base d'un maillage de type arbre quaternaire, encore appelé en anglais « quad tree ».

Cependant, ces différentes techniques de codage d'images connues présentent de nombreux inconvénients, notamment pour les applications ou les réseaux de transmission à très bas débit.

Ainsi, les techniques de codage basées blocs conduisent à l'apparition de forts effets, ou artefacts, qui réduisent fortement la qualité visuelle de la restitution de l'image. Les codages de type MPEG-4 ou ITU-T/H.263 sont désormais considérés comme ayant atteint leurs limites, notamment à cause de la structure de blocs rigides de taille fixe, utilisée comme support de l'ensemble des calculs et opérations de codage. De même, pour les techniques mettant en oeuvre des ondelettes, un effet de sur-oscillation, encore appelé en anglais "ringing", donne un rendu flou, ainsi que l'impression, très désagréable pour l'utilisateur, de « voir » l'ondelette sur l'image.

Une technique de traitement des dégradations visuelles dues aux sur-oscillations le long des contours d'une image, applicable au codage et à la compression d'image, est présentée notamment dans le document « high compression image coding using an adaptative morphological subband decomposition », Egger et al., proceedings of the IEEE, New York, vol 83, n°2, 1 février 1995, pages 272-287.

Cette technique de compression d'image repose sur une décomposition adaptative de l'image en sous bandes et sur la mise en oeuvre sélective de filtres linéaires sur les zones texturées de l'image et de filtres morphologiques sur les autres zones.

Pour les applications ou les réseaux de transmission de débits plus élevés, ces différentes techniques ne permettent pas d'atteindre la limite en efficacité de codage.

Enfin, aucune de ces techniques de l'art antérieur ne permet d'optimiser le codage d'une image, en tenant compte des caractéristiques intrinsèques de cette dernière.

En outre, dans le cadre du codage de séquences vidéo, et dans un souci de réduction du volume de données transmises et codées, on procède couramment en calculant une image d'erreur, comme la soustraction d'une image originale de la séquence et d'une image interpolée, ou déterminée par estimation/compensation de mouvement. On pourra se référer par exemple à la demande de brevet français n°00 10917 intitulée "Procédé de construction d'au moins une image interpolée entre deux images d'une séquence animée, procédés de codage et de décodage, signal et support de données correspondants" au nom du même titulaire que la présente demande de brevet.

Or aucune des techniques de codage connues n'est adaptée au contenu spécifique de telles images d'erreurs, qui ne contiennent généralement que des hautes fréquences, telles que des contours, des textures, ou encore des singularités.

L'invention a notamment pour objectif de pallier ces inconvénients de l'art antérieur.

Plus précisément, un objectif de l'invention est de fournir une technique de codage d'images fixes ou animées permettant d'optimiser le résultat du codage par rapport aux techniques de l'art antérieur.

Un autre objectif de l'invention est de mettre en oeuvre une telle technique, qui permette de réduire le volume des données issues du codage, et donc éventuellement transmises par un réseau de communication jusqu'au dispositif de décodage et de restitution de l'image.

L'invention a également pour objectif de mettre en oeuvre une telle technique qui soit "échelonnable", c'est-à-dire qui s'adapte aux fluctuations des réseaux de transmission, et notamment aux variations de débit de tels réseaux.

L'invention a aussi pour objectif de fournir une telle technique qui permette une transmission à bas débit des informations de codage d'une image ou d'une séquence d'images.

Un autre objectif de l'invention est de mettre en oeuvre une telle technique qui permette d'atteindre une bonne qualité visuelle de restitution de l'image codée, et notamment des zones de discontinuité de cette image.

L'invention a également pou objectif de fournir une telle technique qui soit bien adaptée au codage d'images d'erreur.

L'invention a encore pour objectif de fournir une telle technique qui soit simple et peu coûteuse à mettre en oeuvre.

Ces objectifs, ainsi que d'autres qui apparaîtront par la suite, sont atteints à l'aide d'un procédé de codage d'une image à laquelle est associé un maillage hiérarchique, mettant en oeuvre un codage dudit maillage par ondelettes.

Selon l'invention, un tel procédé de codage met en oeuvre au moins deux types d'ondelettes appliquées sélectivement à des zones distinctes de ladite image.

Ainsi, l'invention repose sur une approche tout à fait nouvelle et inventive du codage d'images fixes ou animées, et notamment du codage d'images d'une séquence vidéo. En effet, l'invention propose non seulement de coder les images selon la technique innovante des ondelettes, et notamment des ondelettes de deuxième génération telles qu'introduites par W. Dahmen ("Decomposition of refinable spaces and applications to operator equations", Numer. Algor., N°5, 1993, pp.229-245, en français "décomposition d'espaces pouvant être raffinés et applications aux équations d'opérateur") et J. M. Carnicer, W. Dahmen et J.M. Pena ("Local decomposition of refinable spaces", Appl. Comp. Harm. Anal. 3, 1996, pp. 127-153, en français "décomposition locale d'espaces pouvant être raffinés"), mais également d'optimiser un tel codage, en appliquant des types d'ondelettes différents à des zones distinctes de l'image.

En effet, les inventeurs de la présente demande de brevet ont mis en évidence le fait que les différents types d'ondelettes existantes présentent des propriétés de codage distinctes. Ils ont donc eu l'idée d'exploiter ces différentes propriétés, en appliquant, aux différentes zones d'une image, le type d'ondelettes dont les propriétés de codage sont les mieux adaptées au contenu de chacune des zones.

On optimise ainsi le codage global de l'image, en adaptant le codage par ondelettes à des régions de l'image de caractéristiques différentes, et en utilisant, si nécessaire, plusieurs types d'ondelettes distinctes pour le codage d'une même image.

Préférentiellement, un tel procédé de codage comprend les étapes suivantes :

- une étape de partitionnement de ladite image en au moins deux zones de natures distinctes, la nature d'une zone étant fonction d'au moins un paramètre caractéristique dudit maillage dans ladite zone ;
- pour chacune desdites zones, une étape d'affectation, au moins en fonction de ladite nature, d'un type d'ondelettes permettant d'optimiser ledit codage dudit maillage de ladite zone.

On comprendra bien sûr que, dans le cas où l'image est homogène, en ce sens que toutes les zones de cette image sont de même nature, on ne partitionne pas l'image, mais on procède directement à l'affectation, à l'ensemble de l'image, du type d'ondelettes permettant d'optimiser le codage de l'image dans son intégralité.

Avantageusement, ledit paramètre caractéristique dudit maillage tient compte de la densité dudit maillage dans ladite zone.

En effet, la densité du maillage en un point de la zone, et dans une région englobant ce point, permet par exemple de déterminer si la zone considérée est une zone de texture, de contour, ou de singularité, comme il sera décrit plus en détail par la suite dans ce document.

Selon une caractéristique avantageuse de l'invention, ladite nature de ladite zone appartient au groupe comprenant :

- au moins un type de texture ;
- au moins un type de contour ;

- au moins un type de singularité ;
- au moins un type de couleur ;
- au moins un type de forme.

Selon une caractéristique préférentielle de l'invention, lesdits types d'ondelettes appartiennent au groupe comprenant :

- les ondelettes de Loop ;
- les ondelettes de Butterfly ;
- les ondelettes de Catmull-clark ;
- les ondelettes affines.

L'Homme du Métier comprendra aisément que l'invention ne se limite pas aux seuls types d'ondelettes indiqués ci-dessus, qui ne sont présentées qu'à titre illustratif.

De manière avantageuse, un tel procédé de codage comprend, pour chacune desdites zones, une étape d'application audit maillage de coefficients dudit type d'ondelettes affecté à ladite zone, tenant compte d'une valeur scalaire associée audit maillage en un point de mise à jour de ladite zone et de ladite valeur scalaire associée audit maillage en au moins certains points voisins dudit point de mise à jour.

Préférentiellement, ladite valeur scalaire représente un paramètre dudit maillage appartenant au groupe comprenant :

- la luminance dudit maillage ;
- au moins une composante de chrominance dudit maillage.

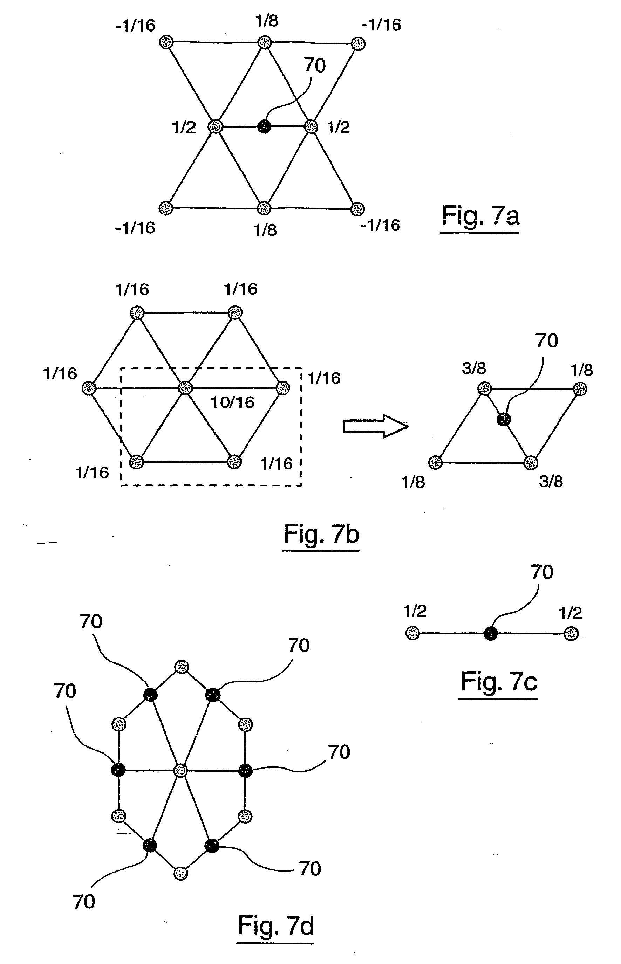

Ainsi, on se place par exemple au point d'application du maillage (ou point de mise à jour), et on considère une composante de la chrominance en ce point. On étudie alors la valeur de cette même composante de chrominance aux points voisins de ce point de mise à jour, pour appliquer en conséquence les coefficients d'ondelettes (par pondération), ainsi que présenté plus en détail par la suite en relation avec les figures 7a à 7d.

De manière préférentielle, un tel procédé de codage comprend en outre une étape de codage desdits coefficients d'ondelettes mettant en oeuvre une technique appartenant au groupe comprenant :

- une technique de type zero-tree ;
- une technique de type EBCOT.

Avantageusement, ladite image appartenant à une séquence d'images successives, ledit procédé comprend en outre une étape de comparaison desdits coefficients d'ondelettes de ladite image aux coefficients d'ondelettes d'au moins une image précédente ou suivante de ladite séquence, de façon à éviter de mettre en oeuvre ladite étape de codage pour des coefficients d'ondelettes de ladite image identiques à ceux de ladite image précédente ou suivante.

On réduit ainsi le volume des données transmises, ce qui est particulièrement avantageux dans le cas de réseaux de transmission à bas débit, ou pour les terminaux de restitution de faible capacité. Pour les coefficients d'ondelettes identiques aux coefficients précédemment transmis pour une autre image, on peut se contenter de transmettre un ensemble de zéros, ainsi qu'une référence permettant d'indiquer où les coefficients d'ondelettes peuvent être trouvés (par exemple, une référence à l'image précédente pour laquelle ces coefficients ont déjà été reçus par le dispositif de décodage).

De manière avantageuse, un tel procédé de codage permet de coder une séquence d'images successives, et ladite image est une image d'erreur, obtenue par comparaison d'une image originale de ladite séquence et d'une image construite par estimation/compensation de mouvement, ladite image comprenant au moins une région d'erreur à coder et éventuellement au moins une région sensiblement vide.

Bien sûr, dans le cas où l'image originale est absolument identique à l'image estimée, l'image d'erreur est vide, et ne comprend donc pas de région d'erreur à coder. Inversement, si l'image originale diffère en tout point de l'image estimée, l'image d'erreur ne comprend pas de région vide.

De manière préférentielle, ladite étape de partitionnement comprend une étape de détection desdites régions d'erreur de ladite image par seuillage, permettant de déterminer au moins une région de ladite image présentant une erreur supérieure à un seuil prédéterminé.

Ce seuil peut être paramétré en fonction des contraintes de l'application ou du réseau de transmission considéré, ou encore en fonction de la qualité de restitution que l'on souhaite obtenir.

Selon une première variante de réalisation avantageuse de l'invention, ladite étape de partitionnement comprend également une étape de regroupement d'au moins certaines desdites régions d'erreur détectées par blocs de forme parallélipipédique.

Préférentiellement, ladite étape de partitionnement comprend une étape de création desdites zones de ladite image sous forme d'ensembles de blocs de même nature.

On applique ainsi un même traitement par ondelettes à tous les blocs de même nature de l'image, même si ces blocs sont distants les uns des autres au sein de l'image.

Selon une deuxième variante de réalisation avantageuse de l'invention, ladite étape de partitionnement comprend une étape de création desdites zones de ladite image à partir desdites régions d'erreur détectées, mettant en oeuvre une technique de type quadtree.

L'invention concerne également un procédé de décodage d'une image à laquelle est associé un maillage hiérarchique codé par ondelettes, mettant en oeuvre un décodage sélectif de zones distinctes de ladite image, en fonction d'informations relatives à un type d'ondelettes affecté au codage du maillage de chacune desdites zones.

Ainsi, l'image ayant été partitionnée lors du codage en au moins deux zones de natures distinctes, et la nature d'une zone étant fonction d'au moins un paramètre caractéristique dudit maillage dans ladite zone, le procédé de décodage de l'invention comprend les étapes suivantes :

- une étape d'extraction, au sein d'un flux représentatif de l'image codée, d'informations relatives au type d'ondelettes affecté au codage du maillage de chacune des zones ;
- pour chacune des zones, une étape de décodage, en fonction de telles informations, du maillage de la zone.

L'invention concerne aussi un dispositif de codage d'une image à laquelle est associé un maillage hiérarchique, mettant en oeuvre des moyens de codage dudit maillage par ondelettes, et comprenant des moyens d'application sélective d'au moins deux types d'ondelettes à des zones distinctes de ladite image.

Le dispositif de codage de l'invention comprend donc les moyens suivants :

- des moyens de partitionnement de l'image en au moins deux zones de natures distinctes, la nature d'une zone étant fonction d'au moins un paramètre caractéristique du maillage dans la zone ;
- des moyens, mis en oeuvre pour chacune des zones, d'affectation, en fonction de la nature de la zone, d'au moins un type d'ondelettes permettant d'optimiser le codage du maillage de la zone.

L'invention concerne encore un dispositif de décodage d'une image à laquelle est associé un maillage hiérarchique codé par ondelettes, comprenant des moyens de décodage sélectif de zones distinctes de ladite image, en fonction d'informations relatives à un type d'ondelettes affecté au codage du maillage de chacune desdites zones.

Ladite image ayant été partitionnée lors du codage en au moins deux zones de natures distinctes, et la nature d'une zone étant fonction d'au moins un paramètre caractéristique du maillage dans la zone, le dispositif de décodage de l'invention comprend donc les moyens suivants :

- des moyens d'extraction, au sein d'un flux représentatif de l'image codée, d'informations relatives à un type d'ondelettes affecté au codage du maillage de chacune des zones ;
- pour chacune des zones, des moyens de décodage, en fonction de telles informations, du maillage de la zone.

L'invention concerne également un signal représentatif d'une image à laquelle est associé un maillage hiérarchique codé par ondelettes. Selon l'invention, au moins deux types d'ondelettes ayant été appliqués sélectivement à des zones distinctes de ladite image lors du codage, un tel signal véhicule des informations relatives audit type d'ondelettes affecté au codage du maillage de chacune desdites zones.

L'image ayant été partitionnée, lors du codage en au moins deux zones de natures distinctes, et la nature d'une zone étant fonction d'au moins un paramètre caractéristique du maillage dans la zone, le signal de l'invention véhicule donc des informations relatives à un type d'ondelettes affecté au codage du maillage de chacune des zones.

Avantageusement, un tel signal est structuré sous forme de paquets associés chacun à l'une desdites zones de ladite image, chacun desdits paquets comprenant les champs suivants :

- un champ indicatif d'un début de paquet ;
- un champ véhiculant un identifiant dudit paquet ;
- un champ d'en-tête d'informations (en anglais "information header");
- un champ comprenant lesdites informations relatives audit type d'ondelettes affecté à ladite zone ;
- un champ comprenant des coefficients d'ondelettes appliqués audit maillage de ladite zone ;
- un champ relatif à la forme dudit maillage de ladite image ;
- un champ indicatif d'une fin de paquet.

Préférentiellement, ledit champ d'en-tête d'informations comprend :

- un sous-champ relatif au nombre de coefficients d'ondelettes de ladite zone ;
- un sous-champ indiquant ladite zone de ladite image, en fonction de ladite forme dudit maillage ;
- un sous-champ relatif au nombre de plans de bits mis en oeuvre pour lesdits coefficients d'ondelettes.

L'invention concerne encore l'application du procédé de codage et du procédé de décodage décrits précédemment à l'un au moins des domaines appartenant au groupe comprenant :

- le "streaming" vidéo (en français, "émission d'un flux vidéo") ;
- le stockage des vidéos ;
- la visioconférence ;
- la vidéo à la demande (en anglais VOD pour "Video On Demand") ;
- les mels vidéo.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- les figures 1a et 1b rappellent les schémas généraux de décomposition lifting, telle que décrite notamment par W. Sweldens "The Lifting Scheme : A New Philosophy in Bi Orthogonal Wavelets Constructions", Proc. SPIE 2529, 1995, pp 68-69 (en français "Le schéma "lifting": une nouvelle philosophie pour les constructions par ondelettes bi-orthogonales") ;
- la figure 2 illustre le principe général de l'invention, reposant sur le choix de transformations par ondelettes adaptées aux caractéristiques de différentes zones d'une image ;
- la figure 3 décrit le principe de partitionnement de l'image de la figure 2 en différentes zones, selon une technique de type quadtree, lorsque l'image est une image d'erreur ;
- la figure 4 présente un exemple de maillage régulier dense appliqué à une image selon l'invention ;
- les figures 5a à 5g illustrent différentes étapes de subdivision du maillage d'une image mises en oeuvre dans le cadre de l'invention ;
- la figure 6 présente le principe de gestion des bords dans le cadre de l'invention ;
- les figures 7a à 7d illustrent les différents schémas d'ondelettes qui peuvent être appliquées aux différentes zones d'une image selon l'invention.

Le principe général de l'invention repose sur l'application de différents types d'ondelettes, et notamment d'ondelettes de deuxième génération, à différentes zones d'une image, de façon à optimiser le codage global de l'image, en choisissant un type d'ondelettes dont les propriétés de codage sont adaptées au contenu de la zone considérée.

Préalablement à la description d'un mode de réalisation détaillé de l'invention, on commence tout d'abord par faire quelques rappels succincts sur le codage vidéo, ainsi que sur les notions de maillage, de lifting et d'ondelettes de deuxième génération. En effet, l'invention peut notamment être mise en oeuvre dans le contexte général du codage d'une séquence vidéo, qui repose sur ces différentes notions.

Le principe général du codage vidéo, qui est par exemple décrit dans le document ISO/IEC (ITU-T SG8) JTC1/SC29 WG1 (JPEG/JBIG), JPEG2000 Part 1 Final Committee Draft, Document N1646R, Mars 2000 consiste à décrire une vidéo numérique sous la forme d'une succession d'images représentées dans le plan YUV (Luminance/ Chrominance r/Chrominance b), échantillonnées de manière diverse (4:4:4 / 4:2:2 / 4:2:0...). Le système de codage consiste à changer cette représentation en tenant compte des redondances spatiales et temporelles dans les images successives. On applique donc des transformations (de type DCT ou ondelettes par exemple) pour obtenir une série d'images inter-dépendantes.

Ces images sont « rangées » dans l'ordre IB/P, où chaque type d'image a des propriétés bien déterminées. Les images I, encore appelées images « intras », sont codées de la même façon que des images fixes et servent de référence aux autres images de la séquence. Les images P, encore appelées images « prédites », contiennent deux types d'informations : une information d'erreur compensée en mouvement et les vecteurs mouvements. Ces deux informations sont déduites d'une ou plusieurs images précédentes qui peuvent être de type I, ou de type P. Les images B, encore appelées images « bidirectionnelles », contiennent elles aussi ces deux informations, mais sont basées sur deux références, à savoir une référence arrière et une référence avant, qui peuvent être de type I, ou de type P.

Dès lors, il suffit de transmettre l'image intra « I » codée de manière classique, puis les vecteurs mouvements et les erreurs relatifs à chaque image successive, pour pouvoir restituer l'intégralité de la séquence vidéo considérée.

Les techniques connues de codage d'images fixes ou de séquences vidéo reposent également sur l'utilisation de maillages hiérarchiques, que l'on associe aux images à coder. Ainsi, considérons une image fixe, par exemple codée en niveaux de gris. L'image peut être considérée comme une représentation discrétisée d'une surface paramétrique. On peut donc appliquer, soit sur une zone de l'image, soit sur l'image entière, un maillage quelconque. Par subdivision hiérarchique (qui peut être adaptative ou non), on fait évoluer ce maillage de manière régulière ou irrégulière. On dispose ainsi d'une « hiérarchie », en subdivisant le maillage dans les seules régions de l'image où l'erreur calculée est supérieure à un seuil prédéterminé. Un aperçu général des techniques à base de maillages est également présenté dans le document ISO/IEC (ITU-T SG8) JTC1/SC29 WG1 (JPEG/JBIG), JPEG2000 Part I Final Committee Draft, Document N1646R, Mars 2000.

Certaines techniques de codage d'images reposent également sur une méthode de décomposition par ondelettes particulière, appelée "lifting", décrite notamment par W. Sweldens "The Lifting Scheme : A New Philosophy in Bi Orthogonal Wavelets Constructions", Proc. SPIE 2529, 1995, pp 68-69 (en français "Le schéma "lifting": une nouvelle philosophie pour les constructions par ondelettes bi-orthogonales"). Le lifting est apparu depuis peu et s'impose comme une méthode de décomposition par ondelettes plus simple et plus rapide que la méthode usuelle, convolutive. Elle permet une reconstruction simple, par de simples opérations lignes/colonnes sur la matrice d'analyse.

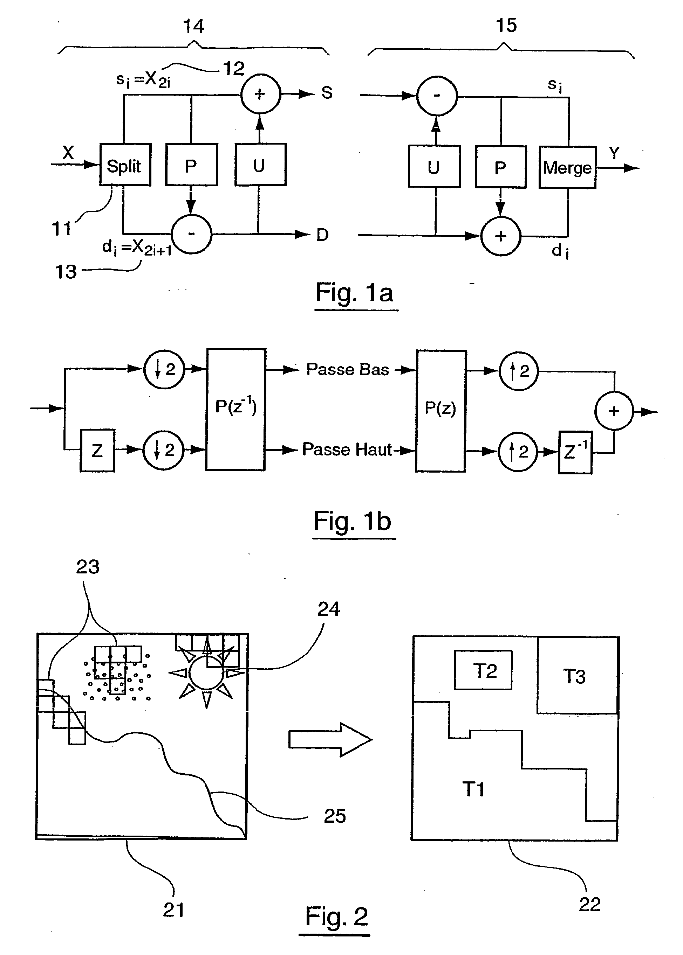

On présente, en relation avec les figures 1a et 1b, les schémas généraux dé la décomposition "lifting", ainsi que la forme de la matrice polyphase associée.

La méthode générale consiste à séparer 11 le signal en 2 échantillons pairs 12 et impairs 13 et à prédire les échantillons impairs en fonction des échantillons pairs. Une fois la prédiction réalisée, une mise à jour du signal est effectuée afin d'en préserver les propriétés initiales. Cet algorithme peut être itéré autant de fois que voulu. La représentation par lifting conduit à la notion de matrice polyphase, qui permet l'analyse 14 et la synthèse 15 du signal.

La figure 1b illustre plus précisément le schéma "lifting" concaténé avec la matrice polyphase P(z) telle que :

$$P(z) = \begin{bmatrix} A & 0 \\ 0 & B \end{bmatrix} \prod_{i=n}^{1} \begin{bmatrix} 1 & s_i(z) \\ 0 & 1 \end{bmatrix} \begin{bmatrix} 1 & 0 \\ t_i(z) & 1 \end{bmatrix}$$

et

$$P^{-1}(z) = \prod_{i=1}^{n} \begin{bmatrix} 1 & 0 \\ -t_i(z) & 1 \end{bmatrix} \begin{bmatrix} 1 & -s_i(z) \\ 0 & 1 \end{bmatrix} \begin{bmatrix} 1/A & 0 \\ 0 & 1/B \end{bmatrix}$$

avec $s_i(z)$ et $t_i(z)$ deux polynômes de Laurent, et A et B des coefficients de normalisation.

On rappelle enfin que les ondelettes de deuxième génération, qui peuvent notamment être mises en oeuvre dans le cadre de la présente invention, constituent une nouvelle transformation, issue du monde mathématique.

Cette transformation a été introduite en premier lieu par W. Dahmen ("Decomposition of refinable spaces and applications to operator equations", Numer. Algor., N°5, 1993, pp.229-245, en français "décomposition d'espaces pouvant être raffinés et applications aux équations d'opérateur") et J. M. Carnicer, W. Dahmen et J.M. Pena ("Local decomposition of refinable spaces", Appl. Comp. Harm. Anal. 3, 1996, pp. 127-153, en français "décomposition locale d'espaces pouvant être raffinés") puis développée par W.Sweldens ("The Lifting Scheme : A Construction of Second Generation Wavelets", Nov 1996, SIAM Journal on Mathematical Analysis, en français "Le schéma "lifting" : une construction d'ondelettes de deuxième génération") et W. Sweldens & P. Schröder ("Building Your Own Wavelet at Home", Chapter 2, Technical report 1995, Industrial Mathematics Initiative, en français "Construisez vos propres ondelettes chez vous").

Ces ondelettes sont construites à partir d'une subdivision irrégulière de l'espace d'analyse, et sont basées sur une méthode d'interpolation pondérée et moyennée. Le produit vectoriel habituellement utilisé sur $L^2(R)$ devient un produit vectoriel interne pondéré. Ces ondelettes sont particulièrement bien adaptées pour les analyses sur des supports compacts et sur les intervalles. Elles conservent cependant les propriétés des ondelettes de première génération, à savoir une bonne localisation temps/fréquence et une bonne rapidité de calculs, car elles sont construites autour de la méthode lifting exposée précédemment.

M. Lounsbery, T. DeRose, et J. Warren dans "Multiresolution Analysis for Surfaces of Arbitrary Topological Type", ACM Transactions on Graphics, 1994 (en français "Analyse multirésolution de surfaces de type topologique arbitraire") ont envisagé d'appliquer ces ondelettes sur une structure surfacique quelconque. Dans le cadre de la présente invention, ces ondelettes sont appliquées sur un maillage, qui constitue une surface dont la topologie peut être quelconque.

Pour définir de manière exacte ces ondelettes de deuxième génération, on peut tout d'abord rappeler les propriétés que ces dernières ont en commun avec les ondelettes dites de première génération, puis indiquer les propriétés supplémentaires que ces ondelettes de deuxième génération présentent, et qui sont notamment exploitées dans le cadre de la présente invention.

Propriétés communes aux ondelettes de première et de deuxième génération :

P1 : Les ondelettes forment une base de Riez sur $L_2(R)$, ainsi qu'une base « uniforme» pour une grande variété d'espace de fonctions, tel que les espaces de Lebesgue, Lipchitz, Sobolev et Besov. Cela signifie que toute fonction des espaces cités peut être décomposée sur une base d'ondelettes, et cette décomposition convergera uniformément en norme (la norme de l'espace de départ) vers cette fonction.

P2 : Les coefficients de décomposition sur la base uniforme sont connus (ou peuvent être trouvés simplement). Soit les ondelettes sont orthogonales, soit les ondelettes duales sont connues (dans le cas bi-orthogonal).

P3 : Les ondelettes, ainsi que leur duales, ont des propriétés locales en espace et en fréquence. Certaines ondelettes sont même à support compact (la présente invention utilise préférentiellement, mais non exclusivement, dé telles ondelettes). Les propriétés de localisation en fréquence découlent directement de la régularité de l'ondelette (pour les hautes fréquences) et du nombre de moments polynomiaux nuls (pour les basses fréquences).

P4 : Les ondelettes peuvent être utilisées en analyse multirésolution. Cela conduit à la FWT (*Fast Wavelet transform,* en français, "transformée en ondelettes rapide "), qui permet de passer de la fonction aux coefficients ondelettes en « temps linéaire ».

Propriétés supplémentaires caractérisant les ondelettes de seconde génération:

Q1 : Alors que les ondelettes de première génération donnent des bases pour des fonctions définies sur $R^n$, certaines applications (segmentation de données, solutions des équations aux dérivées partielles sur des domaines généraux, ou application des ondelettes sur un maillage à topologie arbitraire...), nécessitent des ondelettes définies sur des domaines de $R^n$ arbitraires, tels que les courbes, les surfaces ou les variétés ;

Q2 : La diagonalisation des formes différentielles, l'analyse des courbes et des surfaces, et les approximations pondérées, nécessitent une base adaptée aux mesures pondérées. Cependant, les ondelettes de première génération ne fournissent de bases que pour les espaces avec des mesures invariantes par translation (typiquement les mesures de Lebesgue) ;

Q3 : Beaucoup de problèmes réels nécessitent des algorithmes adaptés pour les données à échantillonnage irrégulier, alors que les ondelettes de première génération ne permettent qu'une analyse sur les données échantillonnées de manière régulière.

Ainsi, pour résumer la construction des ondelettes de deuxième génération, on peut mettre en avant les principes ci-dessous.

Lors de l'analyse multirésolution, on pose que l'espace traditionnelle où évoluent les fonctions d'échelle sont les $V_k$, tels que :

$$\overline{\bigcup_k V_k} = L_2(\Re)$$

On agrandit l'espace d'analyse, en se plaçant dans un Banach (noté B). On a donc, pour les ondelettes de deuxième génération :

$$\overline{\bigcup_k V_k} = B$$

On définit, dans le Banach, au sens des distributions, un produit scalaire permettant de redéfinir les espaces duaux. La condition de raffinement devient (sous forme matricielle) :

$$\phi^{k-1} = P\phi^k$$

où P est une matrice quelconque.

Après ces quelques rappels des notions nécessaires à l'appréhension des techniques de codage vidéo, on présente désormais plus en détail le principe général de l'invention en relation avec la figure 2.

On considère l'image référencée 21, qui peut être une image fixe, ou l'une des images d'une séquence vidéo, que l'on souhaite coder. Un maillage hiérarchique référencé 23 lui est associé. Sur la figure 2, ce maillage est un maillage régulier qui ne recouvre que partiellement l'image 21. Le maillage peut bien sûr également être un maillage irrégulier et/ou recouvrir l'intégralité de l'image 21.

Le principe général de l'invention consiste à identifier, au sein de l'image 21, des zones de natures différentes, auxquelles on choisit d'appliquer des types d'ondelettes distincts, dont les propriétés sont bien adaptées au contenu de la zone considérée. Ainsi, on peut réaliser une partition de l'image 21 de la figure 2, en une pluralité de zones 22, respectivement référencées T1, T2 et T3.

Autant que faire se peut, ces zones référencées T1, T2 et T3 sont construites sous forme de blocs rectangulaires, pour faciliter leur traitement, ou d'ensembles de blocs rectangulaires agglomérés.

Ainsi, la zone référencée T3 de l'ensemble 22, qui correspond au soleil 24 de l'image 21 est un rectangle englobant le soleil 24. En revanche, la zone référencée T1, qui correspond au relief irrégulier 25 de l'image 21, a une forme en escalier, qui correspond à un ensemble de blocs parallélépipédiques suivant au mieux les formes du relief 25.

La zone T1 est une zone de texture de l'image 21, alors que la zone T2 englobe des singularités isolées de l'image 21, et que le soleil de la zone T3 est principalement défini par des contours.

Selon l'invention, on choisit donc le type d'ondelettes qui convient le mieux au codage de chacune de ces zones. Dans un mode de réalisation particulier de l'invention, pour la zone de texture T1, on choisira ainsi d'appliquer une ondelette de type Butterfly, alors que les zones de singularité T2 et de contours T3 seront préférentiellement codées à partir respectivement d'ondelettes affines et d'ondelettes de Loop.

De cette façon, on peut optimiser, tant le codage de l'image 21, que sa qualité de restitution sur un terminal adapté.

Le tableau ci-dessous résume les critères de choix préférentiels selon l'invention de différents types d'ondelettes, en fonction de la nature de la zone à coder.

| Type d'ondelette | Nature de la zone | Justifications |
|---|---|---|
| Butterfly | Texture | Ondelette interpolante, et non polynomiale. Elle est $C^1$ par morceaux (dérivable et à dérivée continue) sur les zones régulières. Elle chute à être $C^1$ sur les sommets du maillage de base. Elle est donc plus adaptée sur les hautes fréquences isolées (donc les textures) |
| Loop | Contours | Ondelette approximante, polynomiale dans les zones régulières. Elle est $C^2$ (deux fois dérivables, et à dérivée seconde continue). Elle respecte la courbure, et en cas de chute à être $C^2$, elle demeure $C^1$ (ce qui garantit le respect de la courbure). Elle est donc adaptée pour les contours et plus particulièrement pour les objets naturels. |
| Catmull-Clark | Contours | Même type d'ondelette que l'ondelette de Loop, plus indiquée dans le cas des contours sur objet non naturel. La même justification que pour les ondelettes de Loop s'applique pour les contours. |
| Affine | Singularités | Ondelette très courte, $C^0$, qui permet de s'adapter rapidement à un point, sans besoin de coder autour de ce point. Elle s'adapte parfaitement aux cas des singularités. |

D'autres types d'ondelettes peuvent bien sûr également être mis en oeuvre dans le cadre de l'invention, qui n'est nullement limitée aux seuls types d'ondelettes et natures de zones décrits dans le tableau ci-dessus.

On notera que, dans le tableau ci-dessus, on distingue, en ce qui concerne les contours notamment, le cas des objets naturels de celui des objets non-naturels. En effet, les objets naturels sont déterminés par des contours plus incertains que les objets non naturels. Ainsi, fréquentiellement, les objets naturels n'ont pas un pic bien défini, contrairement aux objets non naturels. Il convient donc de distinguer les deux cas, en fonction de l'objet traité.

Un critère de distinction de ces deux types d'objets peut par exemple être obtenu par seuillage de l'image filtrée par un filtre passe haut multidirectionnel appliqué sur les niveaux de gris associés au contour.

On s'attache désormais à présenter un mode de réalisation particulier de l'invention dans le contexte général du codage d'une séquence vidéo, dont l'une des étapes particulières correspond à la mise en oeuvre de l'invention.

Un tel codage s'appuie notamment sur les technique de codage vidéo et de "lifting" décrites ci-dessus.

On considère un schéma de type I/(n)B/P, avec n positif ou nul, où I désigne une image "intra", B une image bidirectionnelle et P une image prédite. A titre d'exemple, on peut considérer que l'on met en oeuvre un codage de type MPEG, par exemple MPEG-4, sauf pour les images d'erreur, pour lesquelles on met en oeuvre l'invention, avec codage par maillage et ondelettes de deuxième génération.

On pourrait bien sûr également envisager de remplacer le codage MPEG-4 par tout type de codage basé sur des techniques équivalentes, c'est-à-dire utilisant une prédiction temporelle et une transformation en cosinus discrète (DCT) basées sur une structure de blocs, et les quantifications et codages entropiques pour les informations générées. En particulier, un codage ITU-T/H.264 ou MPEG-4 AVC (tel que décrit notamment dans Joint Final Committee Draft of Joint Video Specification (ITU-T Rec. H.264 | ISO/IEC 14496-10 AVC), Thomas Wiegand, Klagenfurt, 22 juillet 2002) peut être substitué au codage MPEG-4, sans se départir du cadre de la présente invention.

Pour chaque image de la séquence vidéo considérée entrant dans le dispositif de codage, ou codeur, ce dernier décide de la coder avec un module d'encodage MPEG-4 (avec ou sans optimisation débit distorsion), ou avec un module d'encodage spécifique basé sur une optimisation débit distorsion. On rappelle que l'optimisation débit distorsion permet de réaliser un compromis entre la qualité de l'image et sa taille : un algorithme basé sur l'optimisation débit distorsion permet donc de réaliser une optimisation en vue d'atteindre le meilleur compromis possible.

L'estimation de mouvement des images de type P et B est mise en oeuvre selon la technique de "block matching" prévu dans la norme MPEG-4.

Le codage de l'erreur est quant à lui réalisé par la mise en oeuvre de l'invention. Une telle transformation des images d'erreur en ondelettes de deuxième génération basée maillage conduit à une bonne représentation des discontinuités des images (contours , texture, singularités...), pour un coût de codage associée très faible. L'invention permet donc d'atteindre une très bonne efficacité en compression, puisque, d'une part, elle prend en compte les différents types de singularités des images et que, d'autre part, elle traite ces dernières en choisissant un modèle d'ondelettes adapté.

La première étape du codage de la séquence vidéo à laquelle on s'intéresse dans cet concerne le codage des images "intras" I. Ce codage repose par exemple sur l'utilisation d'une transformée DCT comme dans MPEG-4, ou sur l'application d'une méthode de codage par ondelettes de première génération, telle que décrite par exemple par W. Dahmen dans "Decomposition of refinable spaces and applications to operator equations", Numer. Algor., N°5, 1993, pp. 229-245 (en français "Décomposition d'espaces pouvant être raffinés et applications aux équations d'opérateur").

La deuxième étape du codage de la séquence vidéo concerne quant à elle le codage des images prédites P et des images bidirectionnelles B. On compense d'abord ces images en mouvement par une méthode classique estimation/compensation tel que par exemple, le "block matching" [décrit par G.J. Sullivan et R.L. Baker dans "Motion compensation for video compression using control grid interpolation", International Conference on Acoustics, Speech, and Signal Processing, 1991. ICASSP-91, vol.4, pp 2713-2716, en français "Compensation de mouvement pour la compression vidéo utilisant uneinterpolation de grille de contrôle"], puis on stocke les images d'erreur correspondantes.

Ainsi, les images d'erreur sont obtenues par soustraction de l'image exacte de la séquence et d'une image construite par compensation/estimation de mouvement. Si cette dernière diffère de l'image exacte, l'image d'erreur comprend donc au moins une région d'erreur, qu'il convient de coder. Si au moins certaines parties de l'image exacte et de l'image obtenue par compensation de mouvement sont identiques, l'image d'erreur comprend également au moins une région sensiblement vide, pour laquelle il suffit de transmettre une valeur nulle lors de la transmission du flux de codage.

Au cours d'une troisième étape, on sépare les informations d'erreurs et les informations de mouvement, et on s'intéresse à la détection des régions d'erreur au sein de l'image d'erreur, via un seuillage. Si on pose « e » un seuil de tolérance, les régions d'erreurs sont reconnues comme étant toutes les régions de l'image d'erreur présentant une valeur supérieure à ce seuil.

Dans une première variante de réalisation de l'invention, ces régions d'erreurs sont regroupées par blocs (pour avoir des zones sous forme de quadrilatères). Le regroupement des blocs se fait en associant à chaque bloc au moins une caractéristique correspondant à des informations de textures, couleurs, de formes, de contours, de singularités isolées. Cette caractérisation permet de regrouper des blocs entre eux et de générer un partitionnement de l'image, sous forme de zones de natures distinctes, qui permettra de coder chaque zone de la partition suivant sa transformation optimale, par application du type d'ondelettes approprié.

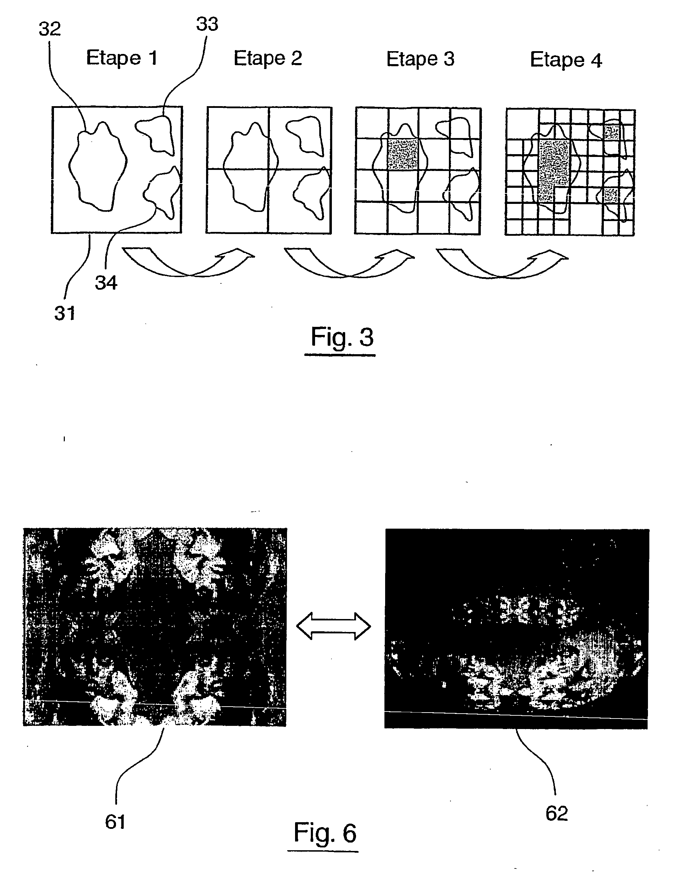

Dans une deuxième variante de réalisation de l'invention, illustrée en figure 3, le partitionnement de l'image en zones de natures distinctes se fait selon une technique de type "quadtree".

On considère une image 31, comprenant par exemple trois régions d'erreur référencées 32 à 34. On opère par itérations successives (étape 1 à étape 4), en partitionnant l'image 31 en quatre zones carrées, chacune de ces zones étant à son tout subdivisée en quatre sous-zones carrées, et ainsi de suite, jusqu'à ce que la maille carrée ainsi obtenue puisse être considérée comme incluse dans la région d'erreur référencée 32, 33 ou 34 de l'image 31.

Après que la détection des différents blocs d'erreur de l'image a été réalisée (selon l'une des deux variantes de réalisation décrites ci-dessus), l'image est donc découpée en zones de différentes natures, ainsi qu'illustré précédemment en relation avec la figure 2, qui sont codées à l'aide d'ondelettes différentes, pour permettre d'optimiser le codage en fonction des propriétés de l'ondelette choisie.

La nature d'une zone peut par exemple être déterminée par la densité du maillage qui la recouvre. Ainsi, si le maillage de la zone considérée est dense, on peut en déduire qu'il s'agit d'une zone de texture.

Une zone comprenant des singularités de l'image est en revanche une zone dans laquelle le maillage est dense autour d'un point de l'image, puis très peu dense sur les points voisins. Une zone de contour est quant à elle caractérisée par un maillage dense dans une direction.

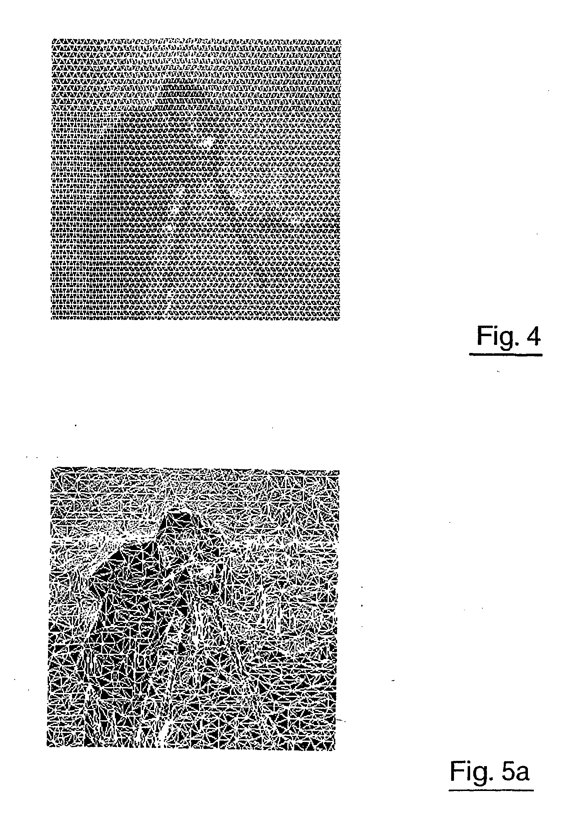

Au cours d'une quatrième étape, après que les zones (préférentiellement sous forme de quadrilatères) de natures distinctes de l'image ont été déterminées, on applique un maillage régulier dense sur chacune de ces zones, ainsi qu'illustré par la figure 4. La densité du maillage est un paramètre ajustable en fonction de l'image. La figure 4 illustre un maillage régulier appliqué à une image représentant un « cameraman ». Ce maillage est du type quinconce. Il permet une subdivision irrégulière et l'emploi des ondelettes de seconde génération.

Au cours d'une cinquième étape de traitement, et selon une première variante de réalisation, on part du maillage régulier dense de la figure 4 pour le faire évoluer vers un maillage grossier « optimal » suivant des critères débit-distorsions prédéterminés et en fonction des différentes propriétés de la zone de l'image considérée (zone de texture, zone de contours, ou zone de singularités par exemple).

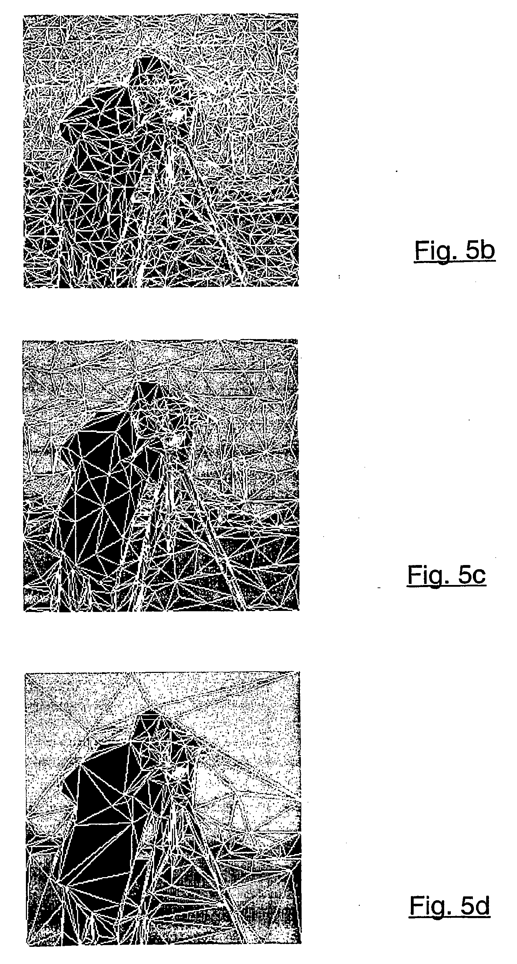

Les figures 5a à 5d illustrent l'évolution du maillage de la figure 4 aux itérations n°3, 6, 9 et 16 respectivement.

Plus précisément, après lecture de l'image et création du maillage régulier de la figure 4, on procède par itérations successives consistant à réaliser une optimisation $L^2$ des triangles du maillages, une fusion des triangles puis un permutation des arêtes, encore appelé "swapping". Les positions des noeuds du maillage sont ensuite quantifiées et une optimisation géométrique est ensuite mise en oeuvre. Il faut en effet vérifier qu'aucune maille ne s'est retournée : on teste donc chaque triangle (opération dite "de clockwise"). Une dernière quantification des points est nécessaire. On revient ensuite à la quantification $L^2$. Cette boucle est réalisée autant de fois que souhaité, le nombre d'itérations successives constituant un paramètre personnalisable du codage.

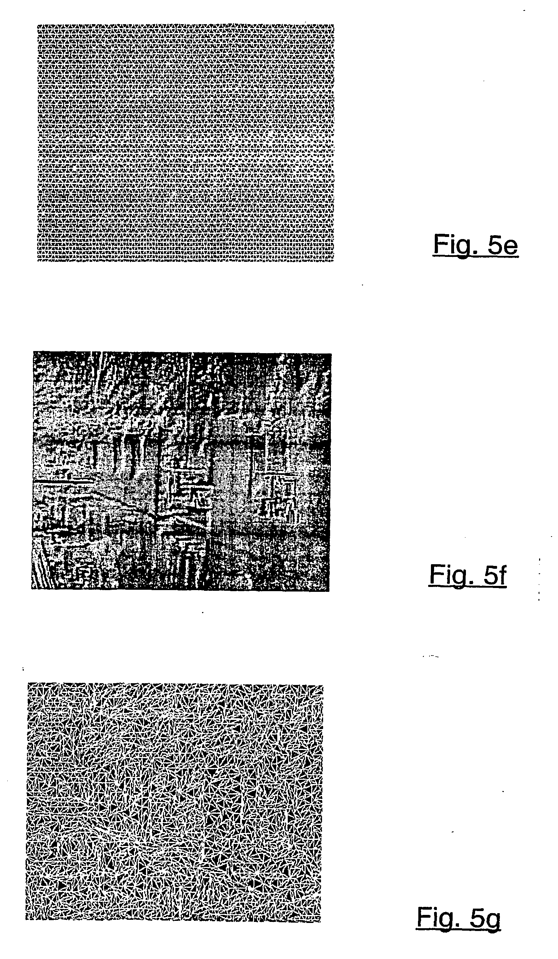

Les figures 5e à 5g illustrent cette cinquième étape du codage de la séquence vidéo dans le cas où l'image considérée est une image d'erreur. Ainsi, la figure 5e représente une image d'erreur extraite de la séquence vidéo dite Foreman ; la figure 5f représente une image d'erreur extraite de la séquence Foreman maillée régulièrement ; enfin, la figure 5g représente une image d'erreur extraite de la séquence Foreman maillée après quelques itérations de l'algorithme de recherche de zones de l'invention.

Cette cinquième étape du codage de la séquence vidéo peut également être mise en oeuvre selon une deuxième variante de réalisation, consistant à appliquer un maillage "grossier" à l'image considérée, puis à raffiner ce maillage grossier par subdivisions successives. Pour générer un tel maillage grossier, on place des points équidistants sur les contours, les textures, et les singularités de l'image, qui permettront ensuite de mailler judicieusement la zone à couvrir, i.e. de manière adaptative On réalise ensuite une subdivision 1 vers 4 standard pour obtenir, par raffinement, le maillage semi régulier final.

On peut par exemple procéder selon la technique décrite par P. Gioia dans "Reducing the number of wavelet coefficients by geometric partitioning", Computational Geometry, Theory and Applications Vol. 14, 1999, pp 25-48 (en français "Réduire le nombre de coefficients d'ondelettes par partition géométrique").

La sixième étape du codage de la séquence concerne la gestion des bords, ainsi qu'illustré par la figure 6. Pour ce faire, on utilise un homéomorphisme du maillage plan 61 (maillage quinconce) à un tore 62 (selon une méthode dite par périodisation) ou encore une symétrisation classique des données. Pour cela, on prolonge l'image en inversant les diagonales situées sur les frontières problématiques (c'est-à-dire sur les frontières qui ne sont pas orientées dans l'une des directions du maillage). L'approche périodisation et symétrisation s'avère importante en images car elle permet d'éviter de biaiser la distribution statistique des coefficients ondelettes à transmettre et donc d'essayer de converger ainsi vers une loi bi-exponentielle

Au cours d'une septième étape, on applique les ondelettes de deuxième génération sur le maillage de l'image. Pour cela, on applique par exemple la méthode proposée par M. Lounsbery, T. DeRose, J. Warren "Multiresolution Analysis for Surfaces of Arbitrary Topological Type", ACM Transactions on Graphics, 1994 (en français "Analyse multi-tirésolution pour des surfaces de type topologique arbitraire) avec les types d'ondelettes sélectionnés selon invention en fonction de la nature de la zone considérée (par exemple des ondelettes de Loop ou de Butterfly).

L'ondelette est appliquée sur le maillage, en tenant compte d'une valeur scalaire associée au maillage au point de mise à jour de la zone (qui peut être dans un exemple particulier le pont central), mais aussi en fonction de cette même valeur scalaire aux points voisins. Cette valeur scalaire peut être par exemple la luminance du point du maillage considéré, ou une composante de la chrominance de ce même point. Il s'en suit une décomposition pondérée par ondelettes, illustrée par les figures 7a à 7d.

La figure 7a illustre une ondelette de Butterfly, dans laquelle le point central référencé 70 indique le point d'application du maillage et où les autres points représentent les coefficients d'interpolation sur les points voisins du maillage. Comme indiqué précédemment, cette ondelette est particulièrement adaptée pour la gestion des textures.

En d'autres termes, on étudie les paramètres caractéristiques du maillage (par exemple, la luminance de l'image en certains points), afin de déterminer s'il est nécessaire et/ou avantageux de rajouter un noeud supplémentaire référencé 70, selon une étape d'analyse par ondelettes de deuxième génération, telle que décrite par exemple dans l'article de M. Lounsbery, T. DeRose, et J. Warren cité précédemment.

Les figures 7b à 7d illustrent respectivement des ondelettes de Loop, affines, et de Catmull-Clark. Le point référencé 70 représente, sur ces différentes figures, le point d'application du maillage, encore appelé point de mise à jours. Les autres points représentent également les coefficients d'interpolation sur les points voisins du maillage.

En procédant de la manière décrite ci-dessus, on obtient donc des coefficients d'ondelettes pour le maillage particulier de la zone de l'imagé considérée. Cette opération est réalisée sur toute l'image, et, dans le cas d'une séquence vidéo, pour toutes les images P/B. On applique, sur chaque partie du maillage, l'ondelette la mieux adaptée en fonction du type de données traitées (par exemple textures, contours, singularités, couleurs, formes, etc.).

Comme indiqué précédemment, afin de déterminer la nature de la zone concernée, on peut raisonner sur la densité du maillage autour d'un point et d'une région autour de ce point. Ainsi, si en un point A de l'image le maillage est dense (par rapport à ses deux voisins successifs) mais qu'autour de cette région, le maillage est vide, on dira qu'il s'agit d'une singularité isolée. On appliquera alors par exemple une ondelette affine. Si, autour de cette région, le maillage est encore dense, on dira qu'il s'agit d'une texture, et on appliquera préférentiellement une ondelette de Butterfly. Pour caractériser les contours, on détectera la densité du maillage suivant une direction (si le maillage est dense selon une direction particulière).

Dans le cadre du codage d'une séquence vidéo, on prend également en compte l'interdépendance des images successives de la séquence : ainsi, lorsqu'on passe d'une image à l'autre, une partie (voile l'ensemble) du maillage peut être le même. Il convient donc de ne transmettre, vers le terminal de décodage ou de restitution, que les noeuds du maillage qui ont changé par rapport à l'image précédente de la séquence. Les autres noeuds seront considérés par le codeur comme fixes. De la même manière, l'ondelette appliquée à un maillage particulier reste dans la plupart des cas invariante d'une image à l'autre. Dans le cas où l'ondelette reste la même, on ne transmet pas d'informations à ce niveau.

Au cours d'une huitième étape, on code les coefficients ondelettes obtenus précédemment : pour ce faire, on met en oeuvre une technique de type zero tree (telle que décrite par exemple par J.M Shapiro dans "Embedded Image Coding Using Zerotree of Wavelet Coefficients", IEEE Transactions on Signal Processing, Vol.41, NO. 12, decembre 1993, pp 3445-3461 (en français "Codage d'image utilisant un zero tree de coefficients d'ondelettes")), ou une méthode de type EBCOT (telle que présentée par exemple par D. Taubman dans "High Performance Scalable Image Compression with EBCOT", IEEE Transactions on Image Processing, Vol. 9, NO. 7, Juillet 2000 (en français "Compression d'image échelonnable de haute performance avec EBCOT")), pour classifier et quantifier les coefficients d'ondelettes.

La neuvième étape du codage de la séquence vidéo concerne la mise en forme de ces coefficients d'ondelettes. Elle peut être réalisée suivant la méthode proposée dans le document ISO/IEC JTC 1/SC 29/WG 11, N4973, AFX Verification Model 8, Klagenfurt, Austria, July 2002, concernée par la normalisation MPEG4. Suivant les zones d'intérêt, ou les zones de fortes erreurs, des paquets peuvent être discriminés par rapport à d'autres lors de la réception et du décodage.

Une autre méthode consiste à transmettre les coefficients d'ondelettes par « ordre » de priorité, suivant la quantité d'erreur contenu dans le paquet. Ainsi, les données peuvent être transmise sous la forme : N° du Paquet/ information Header (nombre de coefficients, zone de l'image, nombre de plans de bit...)/Type d'ondelette/coefficients ondelettes/informations maillages. Les données sont ainsi transmises vers le canal, puis sont reçues pour décodage ou stockage.

Selon l'invention, on définit préférentiellement une structure de signal, organisé sous la forme de paquets consécutifs, chacun de ces paquets comprenant lui-même les champs suivants : début de paquet/N° Paquet/Information Header/Types d'ondelettes/Coefficients d'ondeletttes/Forme du maillage/fin de paquet.

Le champ N° paquet contient un identifiant du paquet qui est attribué par ordre suivant la taille du paquet.

Le champ "Information header" (en français, "en-tête d'informations") comprend les sous-champs suivants :

- le nombre de coefficients d'ondelettes (nombre global dans la zone de l'image traitée) ;
- la zone de l'image considérée (en fonction des informations fournies notamment par le champ "Forme du maillage") ;
- le nombre de plans de bits (utilisés pour le codage des coefficients d'ondelettes).

Le champ Type de l'ondelette indique si l'ondelette appliquée à la zone considérée est par exemple une ondelette de Loop, de Butterfly, de Catmull-Clark, ou encore une ondelette affine, ou de toute autre type choisi en fonction de la nature de la zone considérée.

Le champ Forme du maillage permet quant à lui de transmettre le maillage de base (sous la forme d'un ensemble de sommets et d'arêtes).

Si l'on considère par exemple une image à coder qui a été partitionnée selon l'invention en deux zones de natures distinctes, la première zone ayant été codée par ondelettes de Butterfly, et la seconde par ondelettes de Loop, le signal de l'invention véhiculant la séquence codée transmise est préférentiellement de la forme :

Début d'image
début de paquet / N°145 / 250 coef / sommet5, arete2,4,5; sommet45, arete 56,54,87... / 256 / **butterfly** / (10,25,14), (25,54,84),(...),(25,36,10) / fin de paquet debut de paquet / N°260 / 130 coef / sommet14, arete8,41,5; sommet7, arete 21,47,21... / 256 / loop / (1,5,8), (2,4,42),(...),(52,20,10) / fin de paquet
Fin d'image

L'invention prévoit également d'associer à chaque type d'ondelette un code prédéfini entre le codeur et le décodeur, de façon à simplifier le contenu du champ Type d'ondelettes. Ainsi, on peut envisager d'attribuer aux ondelettes de Loop l'identifiant 1, aux ondelettes de Butterfly, le 2, aux ondelettes de Catmull-clark, le 3, et aux ondelettes affines, le 4. Le champ type d'ondelettes peut alors être codé sur 2 bits.

La méthode de décodage est la méthode duale de la méthode codage. Sur réception du signal véhiculant les paquets ci-dessus, le dispositif de décodage en extrait donc les informations relatives au type d'ondelettes appliqué à chacune des zones définies pour l'image, et applique un décodage sélectif de chacune de ces zones, en fonction du type d'ondelettes utilisé lors du codage.

On obtient donc une image de qualité visuelle optimale, et ce à faible coût de codage.

## Revendications

1. Procédé de codage d'une image comprenant une étape d'obtention d'un maillage hiérarchique associé à ladite image à partir d'un maillage initial sur lequel sont effectués des subdivisions et/ou des regroupements d'éléments dudit maillage initial, **caractérisé en ce qu'**il comprend également des étapes de:

   - partitionnement de ladite image, en au moins deux zones distinctes présentant des caractéristiques particulières selon au moins un critère prédéterminé ;
   - mise en oeuvre d'au moins deux types d'ondelettes affectés auxdites au moins deux zones de ladite image pour coder le maillage desdites zones.

2. Procédé de codage selon la revendication 1, **caractérisé en ce que** lors de ladite étape de partitionnement, ledit critère prédéterminé est la nature desdites zones distinctes, la nature d'une zone étant fonction d'au moins un paramètre caractéristique dudit maillage dans ladite zone, et **en ce que** lors de ladite étape de mise en oeuvre, le type d'ondelettes est déterminé au moins en fonction de ladite nature, de façon à optimiser ledit codage dudit maillage de ladite zone.

3. Procédé de codage selon la revendication 2, **caractérisé en ce que** ledit paramètre caractéristique dudit maillage tient compte de la densité dudit maillage dans ladite zone.

4. Procédé de codage selon l'une quelconque des revendications 2 et 3, **caractérisé en ce que** ladite nature de ladite zone appartient au groupe comprenant :

   - au moins un type de texture ;
   - au moins un type de contour ;
   - au moins un type de singularité ;
   - au moins un type de couleur ;
   - au moins un type de forme.

5. Procédé de codage selon l'une quelconque des revendications 1 à 4, **caractérisé en ce que** lesdits types d'ondelettes appartiennent au groupe comprenant :

   - les ondelettes de Loop ;

- les ondelettes de Butterfly ;
- les ondelettes de Catmull-clark ;
- les ondelettes affines.

6. Procédé de codage selon l'une quelconque des revendications 1 à 5, **caractérisé en ce qu'**il comprend, pour chacune desdites zones, une étape d'application audit maillage de coefficients dudit type d'ondelettes affecté à ladite zone, tenant compte d'une valeur scalaire associée audit maillage en un point de mise à jour de ladite zone et de ladite valeur scalaire associée audit maillage en au moins certains points voisins dudit point de mise à jour.

7. Procédé de codage selon la revendication 6, **caractérisé en ce que** ladite valeur scalaire représente un paramètre dudit maillage appartenant au groupe comprenant :

- la luminance dudit maillage;
- au moins une composante de chrominance dudit maillage.

8. Procédé de codage selon l'une quelconque des revendications 6 et 7, **caractérisé en ce qu'**il comprend en outre une étape de codage desdits coefficients d'ondelettes mettant en oeuvre une technique appartenant au groupe comprenant :

- une technique de type zero-tree ;
- une technique de type EBCOT.

9. Procédé de codage selon la revendication 8, **caractérisé en ce que**, ladite image appartenant à une séquence d'images successives, ledit procédé comprend en outre une étape de comparaison desdits coefficients d'ondelettes de ladite image aux coefficients d'ondelettes d'au moins une image précédente ou suivante de ladite séquence, de façon à éviter de mettre en oeuvre ladite étape de codage pour des coefficients d'ondelettes de ladite image identiques à ceux de ladite image précédente ou suivante.

10. Procédé de codage selon l'une quelconque des revendications 1 à 9, **caractérisé en ce qu'**il permet de coder une séquence d'images successives,
et **en ce que** ladite image est une image d'erreur, obtenue par comparaison d'une image originale de ladite séquence et d'une image construite par estimation/compensation de mouvement, ladite image comprenant au moins une région d'erreur à coder et éventuellement au moins une région sensiblement vide.

11. Procédé de codage selon la revendication 10, **caractérisé en ce que** ladite étape de partitionnement comprend une étape de détection desdites régions d'erreur de ladite image par seuillage, permettant de déterminer au moins une région de ladite image présentant une erreur supérieure à un seuil prédéterminé.

12. Procédé de codage selon la revendication 11, **caractérisé en ce que** ladite étape de partitionnement comprend également une étape de regroupement d'au moins certaines desdites régions d'erreur détectées par blocs de forme parallélipipédique.

13. Procédé de codage selon la revendication 12, **caractérisé en ce que** ladite étape de partitionnement comprend une étape de création desdites zones de ladite image sous forme d'ensembles de blocs de même nature.

14. Procédé de codage selon la revendication 11, **caractérisé en ce que** ladite étape de partitionnement comprend une étape de création desdites zones de ladite image à partir desdites régions d'erreur détectées, mettant en oeuvre une technique de type quadtree.

15. Procédé de décodage d'une image à laquelle est associé un maillage hiérarchique codé par ondelettes, **caractérisé en ce qu'**il comprend des étapes de :

- identification d'au moins deux zones distinctes de ladite image ;
- mise en oeuvre d'un décodage dudit maillage de chacune desdites zones, en utilisant des types d'ondelettes différents affectés auxdites zones lors du codage.dudit maillage.

16. Dispositif de codage d'une image comprenant une étape d'obtention d'un maillage hiérarchique associé à ladite image à partir d'un maillage initial sur lequel sont effectués des subdivisions et/ou des regroupements d'éléments dudit maillage initial,
**caractérisé en ce qu'**il comprend des moyens d'application sélective d'au moins deux types d'ondelettes à des zones distinctes de ladite image pour coder le maillage.

**17.** Dispositif de décodage d'une image à laquelle est associé un maillage hiérarchique codé par ondelettes, **caractérisé en ce qu'**il comprend des moyens de décodage sélectif de zones distinctes de ladite image, en fonction d'informations relatives à un type d'ondelettes affecté au codage du maillage de chacune desdites zones.

**18.** Signal représentatif d'une image à laquelle est associé un maillage hiérarchique, obtenu à partir d'un maillage initial sur lequel sont effectués des subdivisions et/ou des regroupements d'éléments dudit maillage initial et codé par ondelettes,
**caractérisé en ce qu'**au moins deux types d'ondelettes ayant été appliqués sélectivement à des zones distinctes de ladite image lors du codage, ledit signal véhicule des informations relatives audit type d'ondelettes affecté au codage du maillage de chacune desdites zones.

**19.** Signal selon la revendication 18, **caractérisé en ce qu'**il est structuré sous forme de paquets associés chacun à l'une desdites zones de ladite image, chacun desdits paquets comprenant les champs suivants :

- un champ indicatif d'un début de paquet ;
- un champ véhiculant un identifiant dudit paquet ;
- un champ d'en-tête d'informations (en anglais "information header") ;
- un champ comprenant lesdites informations relatives audit type d'ondelettes affecté à ladite zone ;
- un champ comprenant des coefficients d'ondelettes appliqués audit maillage de ladite zone ;
- un champ relatif à la forme dudit maillage de ladite image ;
- un champ indicatif d'une fin de paquet.

**20.** Signal selon la revendication 19, **caractérisé en ce que** ledit champ d'en-tête d'informations comprend :

- un sous-champ relatif au nombre de coefficients d'ondelettes de ladite zone ;
- un sous-champ indiquant ladite zone de ladite image, en fonction de ladite forme dudit maillage ;
- un sous-champ relatif au nombre de plans de bits mis en oeuvre pour lesdits coefficients d'ondelettes.

**21.** Application du procédé de codage selon l'une quelconque des revendications 1 à 14 et du procédé de décodage selon la revendication 15 à l'un au moins des domaines appartenant au groupe comprenant :

- le "streaming" vidéo (en français, "émission d'un flux vidéo") ;
- le stockage des vidéos ;
- la visioconférence ;
- la vidéo à la demande (en anglais VOD pour "Video On Demand") ;
- les mels vidéo.


**Claims**

**1.** Method for encoding an image comprising a step of obtaining a hierarchical mesh associated with the said image on the basis of an initial mesh on which are formed subdivisions and/or clusterings of elements of the said initial mesh, **characterized in that** it also comprises steps of:

- partitioning the said image, into at least two distinct zones exhibiting particular characteristics according to at least one predetermined criterion;
- implementing at least two types of wavelets assigned to the said at least two zones of the said image to encode the mesh of the said zones.

**2.** Encoding method according to Claim 1, **characterized in that** during the said partitioning step, the said predetermined criterion is the nature of the said distinct zones, the nature of a zone being dependent on at least one characteristic parameter of the said mesh in the said zone, and **in that** during the said implementation step, the type of wavelets is determined at least as a function of the said nature, so as to optimize the said encoding of the said mesh of the said zone.

3. Encoding method according to Claim 2, **characterized in that** the said characteristic parameter of the said mesh takes account of the density of the said mesh in the said zone.

4. Encoding method according to either of Claims 2 and 3, **characterized in that** the said nature of the said zone belongs to the group comprising:

   - at least one type of texture;
   - at least one type of contour;
   - at least one type of singularity;
   - at least one type of color; and
   - at least one type of shape.

5. Encoding method according to any one of Claims 1 to 4, **characterized in that** the said wavelet types belong to the group comprising:

   - Loop wavelets;
   - Butterfly wavelets;
   - Catmull-Clark wavelets; and
   - affine wavelets.

6. Encoding method according to any one of Claims 1 to 5, **characterized in that** the method comprises, for each of the said zones, a step of application to the said mesh of coefficients of the said type of wavelets assigned to the said zone, taking account of a scalar value associated with the said mesh at an updating point of the said zone and the said scalar value associated with the said mesh in at least certain points neighbouring the said updating point.

7. Encoding method according to Claim 6, **characterized in that** the said scalar value represents a parameter of the said mesh belonging to the group comprising:

   - the luminance of the said mesh;
   - at least one chrominance component of the said mesh.

8. Encoding method according to either of Claims 6 and 7, **characterized in that** the method furthermore comprises a step of encoding the said wavelet coefficients implementing a technique belonging to the group comprising:

   - a zero-tree type technique;
   - an EBCOT type technique.

9. Encoding method according to Claim 8, **characterized in that**, with the said image belonging to a sequence of successive images, the said method furthermore comprises a step of comparing the said wavelet coefficients of the said image with the wavelet coefficients of at least one image preceding or following the said image in the said sequence, so as to avoid implementating the said encoding step for wavelet coefficients of the said image identical to those of the said preceding or following image.

10. Encoding method according to any one of Claims 1 to 9, **characterized in that** the method enables the encoding of a sequence of successive images, and **in that** the said image is an error image, obtained by comparison of an original image of the said sequence and an image built by motion estimation/compensation, the said image comprising at least one error region to be encoded and optionally at least one substantially empty region.

11. Encoding method according to Claim 10, **characterized in that** the said partitioning step comprises a step of detecting the said error regions of the said image by thresholding, making it possible to determine at least one region of the said image having an error greater than a predetermined threshold.

12. Encoding method according to Claim 11, **characterized in that** the said partitioning step also comprises a step of grouping together of at least some of the said detected error regions in parallelepiped-shaped blocks.

13. Encoding method according to Claim 12, **characterized in that** the said partitioning step comprises creating the said zones of the said image in the form of sets of blocks of a same nature.

**14.** Encoding method according to Claim 11, **characterized in that** the said partitioning step comprises a step of creating the said zones of the said image from the said detected error regions, implementing a quadtree type technique.

**15.** Method for decoding an image with which is associated a wavelet-encoded hierarchical mesh, **characterized in that** it comprises steps of:

- identifying at least two distinct zones of the said image;
- implementing a decoding of the said mesh of each of the said zones, using different types of wavelets assigned to the said zones during the encoding of the said mesh.

**16.** Device for encoding an image comprising a step of obtaining a hierarchical mesh associated with the said image on the basis of an initial mesh on which are performed subdivisions and/or clusterings of elements of the said initial mesh,
**characterized in that** it comprises means of selective application of at least two types of wavelets to distinct zones of the said image to encode the mesh.

**17.** Device for decoding an image with which is associated a wavelet-encoded hierarchical mesh,
**characterized in that** the device comprises means for the selective decoding of distinct zones of the said image as a function of information on a type of wavelet assigned to the encoding of the mesh of each of the said zones.

**18.** Signal representative of an image with which is associated a hierarchical mesh, obtained on the basis of an initial mesh on which are performed subdivisions and/or clusterings of elements of the said initial mesh and encoded by wavelets,
**characterized in that** at least two types of wavelets having been applied selectively to distinct zones of the said image during the encoding, the said signal conveys information relating to the said wavelet type assigned to the encoding of the mesh of each of the said zones.

**19.** Signal according to Claim 18, **characterized in that** the signal is structured in the form of packets each associated with one of the said zones of the said image, each of the said packets comprising the following fields:

- a field indicating the start of a packet;
- a field conveying an identifier of the said packet;
- an information header field;
- a field comprising the said pieces of information on the said type of wavelets assigned to the said zone;
- a field comprising wavelet coefficients applied to the said mesh of the said zone;
- a field relating to the form of the said mesh of the said image;
- a field indicating an end of a packet.

**20.** Signal according to Claim 19, **characterized in that** the said information header field comprises:

- a sub-field on the number of wavelet coefficients of the said zone;
- a sub-field indicating the said zone of the said image, as a function of the said form of the said mesh;
- a sub-field on the number of bitmaps implemented for the said wavelet coefficients.

**21.** Application of the method of encoding according to any one of Claims 1 to 14 and of the method of decoding according to Claim 15 to one at least of the areas belonging to the group comprising:

- video streaming;
- video storage;
- video conferencing;
- video on demand;
- video mail.

**Patentansprüche**

**1.** Verfahren zur Bildcodierung, das einen Schritt des Erhalts einer dem Bild zugeordneten hierarchischen Vernetzung ausgehend von einer Anfangsvernetzung aufweist, an der Unterteilungen und/oder Umgruppierungen von Elementen der Anfangsvernetzung durchgeführt werden, **dadurch gekennzeichnet, dass** es ebenfalls die folgenden Schritte aufweist:

- Aufteilung des Bilds in mindestens zwei unterschiedliche Zonen, die gemäß mindestens einem vorbestimmten Kriterium besondere Eigenschaften aufweisen;
- Anwendung von mindestens zwei Typen von Wavelets, die den mindestens zwei Zonen des Bilds zugeordnet sind, um die Vernetzung der Zonen zu codieren.

2. Codierverfahren nach Anspruch 1, **dadurch gekennzeichnet, dass** im Aufteilungsschritt das vorbestimmte Kriterium die Beschaffenheit der unterschiedlichen Zonen ist, wobei die Beschaffenheit einer Zone von mindestens einem charakteristischen Parameter der Vernetzung in der Zone abhängt, und dass im Anwendungsschritt der Typ von Wavelets zumindest in Abhängigkeit von der Beschaffenheit bestimmt wird, um die Codierung der Vernetzung der Zone zu optimieren.

3. Codierverfahren nach Anspruch 2, **dadurch gekennzeichnet, dass** der charakteristische Parameter der Vernetzung die Dichte der Vernetzung in der Zone berücksichtigt.

4. Codierverfahren nach einem der Ansprüche 2 und 3, **dadurch gekennzeichnet, dass** die Beschaffenheit der Zone zu der Gruppe gehört, die umfasst:

- mindestens einen Texturtyp;
- mindestens einen Konturtyp;
- mindestens einen Singularitätstyp;
- mindestens einen Farbtyp;
- mindestens einen Formtyp.

5. Codierverfahren nach einem der Ansprüche 1 bis 4, **dadurch gekennzeichnet, dass** die Typen von Wavelets zu der Gruppe gehören, die umfasst:

- die Loop-Wavelets;
- die Butterfly-Wavelets;
- die Catmull-Clark-Wavelets;
- die verfeinerten Wavelets.

6. Codierverfahren nach einem der Ansprüche 1 bis 5, **dadurch gekennzeichnet, dass** es für jede der Zonen einen Schritt der Anwendung von Koeffizienten des Typs von Wavelets an die Vernetzung aufweist, der der Zone zugeordnet ist, unter Berücksichtigung eines Skalarwerts, der der Vernetzung an einem Aktualisierungspunkt der Zone zugeordnet ist, und des Skalarwerts, der der Vernetzung an zumindest bestimmten Punkten nahe dem Aktualisierungspunkt zugeordnet ist.

7. Codierverfahren nach Anspruch 6, **dadurch gekennzeichnet, dass** der Skalarwert einen Parameter der Vernetzung darstellt, der zu der Gruppe gehört, die umfasst:

- die Luminanz der Vernetzung;
- mindestens eine Chrominanzkomponente der Vernetzung.

8. Codierverfahren nach einem der Ansprüche 6 und 7, **dadurch gekennzeichnet, dass** es weiter einen Schritt der Codierung der Waveletkoeffizienten aufweist, der eine Technik anwendet, die zu der Gruppe gehört, die umfasst:

- eine Technik vom Typ Zero-Tree;
- eine Technik vom Typ EBCOT.

9. Codierverfahren nach Anspruch 8, **dadurch gekennzeichnet, dass**, da das Bild zu einer Folge von aufeinander folgenden Bildern gehört, das Verfahren außerdem einen Schritt des Vergleichs der Waveletkoeffizienten des Bilds mit den Waveletkoeffizienten mindestens eines vorhergehenden oder nachfolgenden Bilds der Folge aufweist, um zu verhindern, dass der Codierschritt für Waveletkoeffizienten des Bilds angewendet wird, die gleich denjenigen des vorhergehenden oder nachfolgenden Bilds sind.

**10.** Codierverfahren nach einem der Ansprüche 1 bis 9, **dadurch gekennzeichnet, dass** es ermöglicht, eine Folge von aufeinander folgenden Bildern zu codieren,
und dass das Bild ein Fehlerbild ist, das durch Vergleich eines Originalbilds der Folge mit einem durch Bewegungsschätzung und -kompensation konstruierten Bild erhalten wird, wobei das Bild mindestens einen zu codierenden Fehlerbereich und ggf. mindestens einen im Wesentlichen leeren Bereich aufweist.

**11.** Codierverfahren nach Anspruch 10, **dadurch gekennzeichnet, dass** der Aufteilungsschritt einen Schritt der Erfassung der Fehlerbereiche des Bilds durch Schwellwertbildung aufweist, der es ermöglicht, mindestens einen Bereich des Bilds zu bestimmen, der einen größeren Fehler als ein vorbestimmter Schwellwert aufweist.

**12.** Codierverfahren nach Anspruch 11, **dadurch gekennzeichnet, dass** der Aufteilungsschritt ebenfalls einen Schritt der Umgruppierung mindestens mancher der erfassten Fehlerbereiche in Blöcke parallelepipedischer Form aufweist.

**13.** Codierverfahren nach Anspruch 12, **dadurch gekennzeichnet, dass** der Aufteilungsschritt einen Schritt der Erzeugung der Zonen des Bilds in Form von Einheiten von Blöcken gleicher Beschaffenheit aufweist.

**14.** Codierverfahren nach Anspruch 11, **dadurch gekennzeichnet, dass** der Aufteilungsschritt einen Schritt der Erzeugung der Zonen des Bilds ausgehend von den erfassten Fehlerbereichen aufweist, der eine Technik vom Typ Quadtree anwendet.

**15.** Verfahren zur Decodierung eines Bilds, dem eine durch Wavelets codierte hierarchische Vernetzung zugeordnet ist, **dadurch gekennzeichnet, dass** es die folgenden Schritte aufweist:

- Identifikation mindestens zwei unterschiedlicher Zonen des Bilds;
- Anwendung einer Decodierung der Vernetzung jeder der Zonen unter Verwendung unterschiedlicher Typen von Wavelets, die den Zonen bei der Codierung der Vernetzung zugeteilt werden.

**16.** Vorrichtung zur Bildcodierung, die einen Schritt des Erhalts einer dem Bild zugeordneten hierarchischen Vernetzung ausgehend von einer Anfangsvernetzung aufweist, an der Unterteilungen und/oder Umgruppierungen von Elementen der Anfangsvernetzung vorgenommen werden,
**dadurch gekennzeichnet, dass** sie Mittel zur selektiven Anwendung von mindestens zwei Typen von Wavelets an unterschiedliche Zonen des Bilds zur Codierung der Vernetzung aufweist.

**17.** Vorrichtung zur Decodierung eines Bilds, dem eine durch Wavelets codierte hierarchische Vernetzung zugeordnet ist, **dadurch gekennzeichnet, dass** sie Mittel zur selektiven Decodierung unterschiedlicher Zonen des Bilds in Abhängigkeit von Informationen bezüglich eines Typs von Wavelets aufweist, der der Codierung der Vernetzung jeder der Zonen zugeordnet ist.

**18.** Signal, das für ein Bild repräsentativ ist, dem eine hierarchische Vernetzung zugeordnet ist, die ausgehend von einer Anfangsvernetzung erhalten wird, an der Unterteilungen und/oder Umgruppierungen von Elementen der Anfangsvernetzung durchgeführt werden und die durch Wavelets codiert ist,
**dadurch gekennzeichnet, dass**, da beim Codieren mindestens zwei Typen von Wavelets selektiv an unterschiedliche Zonen des Bilds angewendet wurden, das Signal Informationen bezüglich des Typs von Wavelets überträgt, der der Codierung der Vernetzung jeder der Zonen zugeordnet ist.

**19.** Signal nach Anspruch 18, **dadurch gekennzeichnet, dass** es in Form von Paketen aufgebaut ist, die je einer der Zonen des Bilds zugeordnet sind, wobei jedes der Pakete die folgenden Felder aufweist:

- ein einen Paketanfang anzeigendes Feld;
- ein eine Kennung des Pakets übertragendes Feld;
- ein Informations-Vorspannfeld (im Englischen "information header");
- ein Feld, das die Informationen bezüglich des Typs von Wavelets enthält, der der Zone zugeordnet ist;
- ein Feld, das Waveletkoeffizienten enthält, die an die Vernetzung der Zone angewendet werden;
- ein Feld bezüglich der Form der Vernetzung des Bilds;
- ein ein Paketende anzeigendes Feld.

**20.** Signal nach Anspruch 19, **dadurch gekennzeichnet, dass** das Informations-Vorspannfeld aufweist:

- ein Unterfeld bezüglich der Anzahl von Waveletkoeffizienten der Zone;
- ein Unterfeld, das die Zone des Bilds in Abhängigkeit von der Form der Vernetzung anzeigt;
- ein Unterfeld bezüglich der Anzahl von Bitebenen, die für die Waveletkoeffizienten angewendet werden.

21. Anwendung des Codierverfahrens nach einem der Ansprüche 1 bis 14 und des Decodierverfahrens nach Anspruch 15 auf mindestens eine der Domänen, die zur folgenden Gruppe gehören:

- das Video-"Streaming" (auf Deutsch: "Senden eines Videoflusses");
- Speicherung der Videos;
- die Videokonferenz;
- das Video auf Wunsch (im Englischen VOD für "Video On Demand");
- die Videomails.

Fig. 1a

Fig. 1b

Fig. 2

32      Etape 1      33      Etape 2      Etape 3      Etape 4

34

31

Fig. 3

61                   Fig. 6                   62

Fig. 4

Fig. 5a

Fig. 5b

Fig. 5c

Fig. 5d

Fig. 5e

Fig. 5f

Fig. 5g

Fig. 7a

Fig. 7b

Fig. 7c

Fig. 7d